**Europäisches Patentamt**

**European Patent Office**

**Office européen des brevets**

(19)

(11) Veröffentlichungsnummer: **0 111 693**
**A2**

(12) # EUROPÄISCHE PATENTANMELDUNG

(21) Anmeldenummer: **83110734.7**

(22) Anmeldetag: **27.10.83**

(51) Int. Cl.³: **G 06 K 7/08**

(30) Priorität: **19.11.82 DE 3242764**

(43) Veröffentlichungstag der Anmeldung:
**27.06.84 Patentblatt 84/26**

(84) Benannte Vertragsstaaten:
**CH DE FR GB IT LI NL**

(71) Anmelder: **ROBERT BOSCH GMBH**
**Postfach 50**
**D-7000 Stuttgart 1(DE)**

(72) Erfinder: **Fauser, Edwin, Dipl.-Ing.**
**Justinus-Kerner-Strasse 8**
**D-7257 Ditzingen(DE)**

(72) Erfinder: **Hesser, Paul**
**Katharinen Strasse 9**
**D-7141 Freiberg(DE)**

(72) Erfinder: **Schirmer, Günter**
**Kettenweg 13**
**D-7121 Ingersheim(DE)**

(54) **Kodiersystem zur Erfassung von Informationen an mobilen Werkstückträgern.**

(57) Es wird ein Kodiersystem zur Erfassung von Informationen zur Identifizierung von Werkstückträgern von Fertigungsstraßen und dgl. vorgeschlagen, bei dem die Informationen eines mobilen Werkstückträgers an stationären Lesestationen ausgelesen werden. Das Kodiersystem umfaßt zu
diesem Zweck einen Informationsträger (13) am Werkstückträger (10), der im wesentlichen aus einem elektrischen
Schwingkries besteht, welcher eine Übertragerspule (14) mit
einem vorn offenen Magnetkreis (16) enthält. Von stationären Sensoren (12) wird die Resonanzfrequenz des Schwingkreises zur Identifizierung des Werkstückträgers (10) abgefühlt und zur Prozeßsteuerung weiter verarbeitet. Das
Kodiersystem läßt sich überall dort anwenden, wo durch
automatische Steuervorgänge Werkstückträger, Werkstücke
oder mobile Teile an mehrere verschiedene Stationen herangeführt oder von dort wieder abgeführt werden müssen
(Figur 1).

**FIG.1**

ROBERT BOSCH GMBH, 7000 STUTTGART 1

## Kodiersystem zur Erfassung von Informationen an mobilen Werkstückträgern und dgl.

Stand der Technik

Bei bekannten Kodiersystemen von mobilen Teilen, insbesondere von Werkstückträgern oder Werkstücken, die sich zur Weiterverarbeitung, Zusammensetzung oder zum Aussortieren auf einer Fertigungsstraße oder dgl. befinden, werden Informationen zur Kennung des einzelnen Teiles, z.B. des Werkstückträgers aus einem Informationsspeicher herausgelesen, der am Werkstückträger bzw. an dem zu identifizierenden Teil angebracht ist. Die Informationen werden an sogenannten Lesestationen im Bereich der Fertigungsstraße mittels stationär angebrachter Sensoren berührungslos abgetastet.

Für die Identifizierung sind mechanische, optisch lesbare und magnetische Systeme bekannt. Die mechanischen Kodiersysteme (DE-OS 30 12 358) haben den Nachteil, daß sie dem Verschleiß unterworfen sind und daß sie nur eine

...

**0111693**

sehr begrenzte Zahl verschiedener Informationen zulassen,
so daß eine individuelle Kennung von mehr als 10 Werkstückträgern auf einem Fließband oder dgl. kaum möglich
ist. Außerdem wird ein relativ großer Platz für die mechanische Kodierung benötigt, um beim Lesen der gespeicherten
Informationen Fehler zu vermeiden.

Optisch lesbare Kodiersysteme sind insbesondere für das
Verteilen oder Erfassen verpackter Waren bekannt. In
einem bestimmten Feld der Verpackung wird eine Vielzahl
dicker oder dünner Striche auf der Verpackung angebracht,
welche dann durch optische Sensoren ablesbar sind. Solche
Systeme haben jedoch den Nachteil, daß sie sehr schmutzempfindlich sind und folglich nur für besondere, saubere
Fertigungs-, Sortier- und Verpackungsvorgänge eingesetzt
werden können. Bekannte magnetische Kodiersysteme, bei
denen die Informationen mit Hilfe starker Magnetfelder
auf den Informationsträger, z.B. auf einen magnetisierbaren Sinterwerkstoff oder eine Metallfläche aufgebracht werden, haben den Nachteil, daß sie wegen der
magnetischen Streufelder bei berührungsloser Abtastung
eine geringe Informationsdichte haben. Bei einer größeren
Anzahl von Informationen ist der erforderliche Platz
dafür vielfach nicht vorhanden. Außerdem besteht die
Gefahr, daß sich Eisenspäne an den magnetisierten Stellen des Informationsträgers festsetzen und das richtige
Ablesen der gespeicherten Informationen verhindern.

Mit der vorliegenden Lösung wird angestrebt, mit einem
möglichst kleinen Informationsträger an mobilen Teilen,
Werkstücken oder Werkstückträgern eine Vielzahl von
Informationen störungssicher und dauerhaft so einzuspeichern, daß sie in allen Bereichen der Fertigung,
der Lagerung, der Verpackung sowie in Versandsystemen

. . .

**0111693**

durch stationäre Sensoren schnell und zuverlässig auszulesen sind.

## Vorteile der Erfindung

Die erfindungsgemäße Lösung mit den kennzeichnenden Merkmalen des Hauptanspruches hat den Vorteil, daß die Anbringung eines durch die Einstellung des Schwingkreises kodierten Informationsträgers wenig Platz erfordert, und daß die Resonanzfrequenz des Schwingkreises ohne Energiequelle im Informationsträger von einem stationären Sensor abfühlbar ist, indem der Schwingkreis des Informationsträgers als Saugkreis wirkt und die Resonanzfrequenz innerhalb eines vom Sensor abgestrahlten Frequenzbandes durch eine Impedanzänderung am Sensor erfaßt wird. Als weiterer Vorteil ist anzusehen, daß durch eine Vielzahl unterschiedlich eingestellter Schwingkreise eine Vielzahl unterschiedlich kodierter Informationsträger verwendbar ist, so daß damit auch eine Vielzahl von Werkstückträgern, Werkstücken oder anderer Teile auf einer Fertigungsstraße individuell identifiziert werden kann. Dadurch ist es mit dem Kodiersystem möglich, in den Fertigungsstraßen anstelle von Einzelpuffern zwischen verschiedenen Stationen einen Zentralpuffer vorzusehen, aus dem dann jeweils die einzelnen Werkstückträger, Werkstücke oder Teile den richtigen Maschinen zur Weiterverarbeitung zugeführt werden.

Durch die in den Unteransprüchen aufgeführten Maßnahmen sind vorteilhafte Weiterbildungen und Verbesserungen der im Hauptanspruch angegebenen Merkmale möglich. Dabei ist als besonders vorteilhaft anzusehen, den Schwingkreis eines jeden Informationsträgers aus der Übertragungs-

...

spule, einem ersten Kondensator und einer weiteren, mit dem Kondensator in Reihe liegenden Spule auszubilden. Dadurch ist es möglich, den Einfluß des Abstandes zwischen der Übertragerspule des Informationsträgers und dem Sensor auf die Resonanzfrequenz des Schwingkreises soweit herabzusetzen, daß auch bei relativ großen Schwankungen des Luftspaltes zwischen den Lesestationen und der Übertragerspule an den mobilen Teilen die Resonanzfrequenzen schnell und zuverlässig ermittelt werden können. Eine besonders große Vielzahl von kodierten Informationen der Informationsspeicher läßt sich dadurch erreichen, daß im Schwingkreis mehrere Reihenschaltungen aus Spulen und Kondensatoren zueinander und zur Übertragerspule parallel geschaltet sind. Auf diese Weise kann innerhalb eines bestimmten Frequenzbandes der Informationsspeicher auf mehrere Resonanzfrequenzen kodiert und so mit geringem Aufwand am Informationsträger die Anzahl verschiedener Informationen sowie die Anzahl der individuell erkennbaren mobilen Teile nahezu beliebig erhöht werden.

Zeichnung

Ein Ausführungsbeispiel der Erfindung ist in der Zeichnung dargestellt und in der nachfolgenden Beschreibung näher erläutert. Es zeigen Figur 1 den Ausbruch eines Werkstückträgers mit dem erfindungsgemäßen Informationsträger im Bereich eines Abtastsensors, Figur 2 die elektrische Schaltung des Informationsspeichers und des Abtastsensors mit einer Auswerteschaltung und Figur 3 zeigt die vom Abtastsensor gemessene Impedanz des Informationsträgers mit zwei über einen bestimmten Frequenzbereich gemessenen Resonanzstellen.

...

Beschreibung des Ausführungsbeispieles

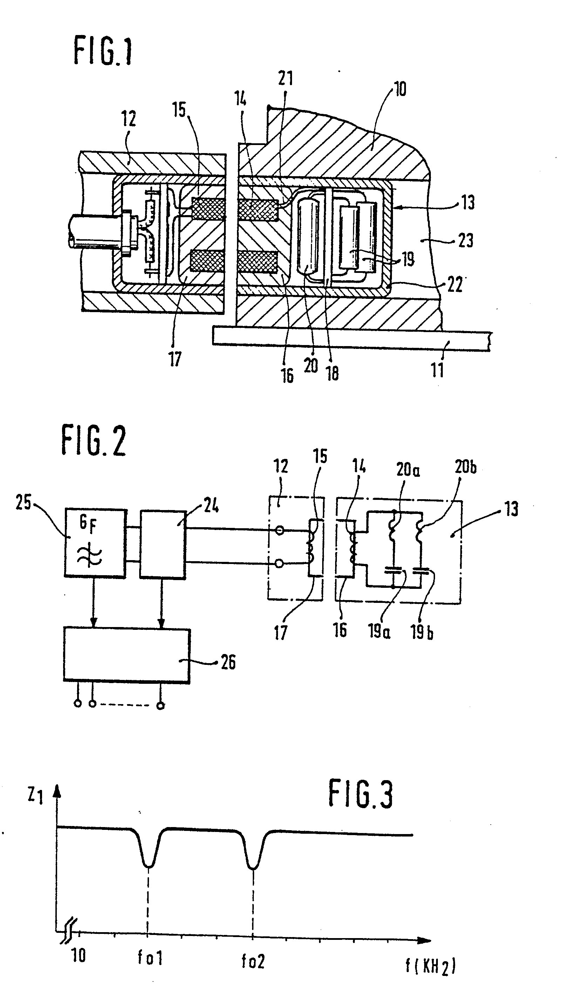

In Figur 1 ist von einer Vielzahl von Werkstückträgern
einer Fertigungsstraße der Ausbruch eines solchen Werkstückträgers dargestellt und mit 10 bezeichnet. Die Werkstückträger 10 liegen auf einem Transportband 11 und dienen
zur Aufnahme von Werkstücken, die an verschiedenen Stationen
der Fertigungsstraße bearbeitet werden. Das Transportband 11 führt dabei die Werkstückträger 10 an verschiedene Abtastsensoren 12 vorbei, von denen einer
in Figur 1 dargestellt ist. Jeder Werkstückträger 10
hat einen Informationsträger 13, in dem eine zu seiner
Identifizierung benötigte Information eingespeichert
ist. An den verschiedenen Abtastsensoren 12 werden diese
Informationen ausgelesen, um anschließend das im Werkstückträger 10 aufgenommene Werkstück dem nächsten Arbeitsgang zuzuführen. Der Informationsträger 13 besteht
im wesentlichen aus einem elektrischen Schwingkreis, der
eine Übertragerspule 14 mit einem vorn offenen Magnetkreis enthält, über den die Resonanzfrequenz des Schwingkreises von den stationären Sensoren 12 abzufühlen ist.
Die Kodierung der Information zur Identifizierung des
Werkstückträgers 10 erfolgt somit durch die Abstimmung
des Schwingkreises auf mindestens eine bestimmte Resonanzfrequenz. Zur Ermittlung der Resonanzfrequenz wird der
Schwingkreis von dem Abtastsensor 12 über ein Magnetfeld
mit einer Folge unterschiedlicher Frequenzen abgefühlt.
Zu diesem Zweck ist auch der Abtastsensor 12 mit einer
Übertragerspule 15 versehen, die ebenfalls einen vorn
offenen Magnetkreis enthält. Beim Abfühlen der Information
des mobilen Werkstückträgers 10 liegt die Übertragungsspule
14 des mobilen Werkstückträgers 10 der Übertragungsspule 15
des stationären Abtastsensors 12 gegenüber. Die Übertrager-

...

spulen 14 und 15 sind dabei jeweils in einem vorn offenen
weichmagnetischen Kern, vorzugsweise einem Schalenkern
16, 17 angeordnet. Hinter dem Schalenkern 16 des Informationsträgers 13 befindet sich eine Leiterplatte 18,
die auf ihrer einen Seite mit Kondensatoren 19 und auf
ihrer anderen Seite mit Spulen 20 bestückt ist und die
über Leitungen 21 mit der Übertragerspule 14 verbunden
den elektrischen Schwingkreis bilden. Der Informationsträger 13 ist in einer vorn offenen Schutzhülle 22
eingebettet und in einer Bohrung 23 im Werkstückträger
10 auswechselbar eingesetzt.

Figur 2 zeigt die elektrische Schaltung des Informationsträgers 13 und des Abtastsensors 12 mit der daran
angeschlossenen Auswerteschaltung 26. Aus dieser Schaltung ist erkennbar, daß die Schwingkreise im Informationsträger 13 aus zwei Reihenschaltungen von je
einer Spule 20a, 20b mit einem Kondensator 19a, 19b
besteht, die zueinander und zur Übertragerspule 14
parallel geschaltet sind. Die Streuinduktivität der
Übertragerspule 14 bildet dabei zusammen mit den Spulen
20a und 20b die gesamte Induktivität der Schwingkreise
im Informationsträgers 13, wobei jedoch die Änderung der
Streuinduktivität der Übertragerspule 14 wesentlich
kleiner ist als die Induktivität der mit den Kondensatoren
19a, 19b in Reihe liegenden Spulen 20a bzw. 20b. Im Beispielsfall beträgt die Streuinduktivität der Übertragerspule 14 etwa 4 mH, die der Spule 20a beträgt 20 mH und
die der Spule 20b beträgt 4 mH, die Änderung der Streuinduktivität ergibt sich aus unterschiedlichen, sich
verändernden Abständen zwischen den Übertragungsspulen
14 und 15. Sie beträgt etwa 1,5 mH. Durch Auswahl der
beiden Kondensatoren 19a und 19b ist der Schwingkreis
des Informationsträgers 10 auf zwei verschiedene Reso-

...

nanzfrequenzen eingestellt, die sich aus der Formel
ergeben:

$$f_o = \frac{1}{2\pi \sqrt{L \cdot C}}$$

Daraus ergeben sich bei einer Kapazität des Kondensators
19a von 2 nF und für den Kondensator 19b von 100 pF
jeweils zwei verschiedene Resonanzfrequenzen mit fo1
von 22 kHz und fo2 = 178 kHz.

Der Abtastsensor 12 ist über eine Impedanzmeßstufe 24
an einen Wobbelgenerator 25 angeschlossen, der innerhalb eines bestimmten Frequenzbereiches von 10 kHz bis
200 kHz eine wiederholte Folge unterschiedlicher Frequenzen auf die Übertragerspule 15 des Abtastsensors
12 gibt. Sobald der Informationsträger 13 im Werkstückträger 10 dem Abtastsensor 12 gegenüberliegt, werden
- wie Figur 3 zeigt - im Bereich der Resonanzfrequenzen
fo1 und fo2 geringere Impedanzwerte gemessen. In einer
Auswerteschaltung 26 werden diese Frequenzen des Wobbelgenerators 25 erfaßt und beispielsweise als Binärzahl
zur Identifizierung des Werkstückträgers 10 in eine
zentrale Steuerschaltung weitergegeben.

Werden bei einer entsprechenden Stufung im Frequenzband
20 mögliche Resonanzfrequenzen mit beispielsweise einem
Abstand von 16 % durch entsprechende Wahl der Kondensatoren 19a und 19b sowie der Spulen 20a und 20b realisiert, so ergeben sich nach der Kombinationslehre

$$h = \binom{n}{k}$$

eine Kombinationszahl von h = 190, bei einer Anzahl von
verschiedenen Resonanzfrequenzen n = 20 und einer Anzahl
von Resonanzgliedern k = 2. Dabei sind zur besseren Redundanz die Kombinationsmöglichkeiten nicht berücksichtigt,
bei denen beide Resonanzkreise gleiche Resonanzfrequenzen
haben. Werden diese 20 Möglichkeiten noch mit einbezogen,

...

so erhöht sich die Kombinationszahl auf insgesamt
h = 210. Es ist folglich mit zwei Resonanzgliedern
19a, 20a bzw. 19b, 20b möglich, bis zu 210 Werkstückträger mit jeweils verschiedenen Informationen zur
Identifizierung zu versehen.

Die Erfindung ist nicht auf das dargestellte Ausführungsbeispiel beschränkt, da die Anzahl der Resonanzglieder
im Schwingkreis des Informationsträgers 13 auf ein Resonanzglied beschränkt oder auf weitere zusätzliche Resonanzglieder erweitert werden kann. Ebenso kann ein größeres
Frequenzband und somit eine größere Anzahl verschiedener
Resonanzfrequenzen mit ausreichendem Abstand voneinander
gewählt werden, um gegebenenfalls noch weitere Kombinationsmöglichkeiten zu erlangen. Durch die Verwendung
von Schwingkreisen läßt sich jedoch eine Kodierung von
Werkstückträgern, von Werkstücken oder anderen Teilen
auf engstem Raume mit hoher Informationsdichte unterbringen. Dabei kann die Kodierung durch Anbringung der
Kondensatoren auch getrennt von der Anbringung der
Übertragerspule erfolgen. Zur besseren Kennung der einzelnen Informationsträger ist es außerdem möglich, die
eingestellten Resonanzfrequenzen außen aufzudrucken
bzw. sie mit einer Kennzahl zu versehen, die der vom
Abtastsensor 12 ausgelesenen, in der Auswerteschaltung
26 ermittelten binären Zahl entspricht. Ein solcher
Informationsträger ist außerdem preisgünstig herstellbar, er ist einfach und robust aufgebaut und durch
die Schutzhülle 22 vor Schmutz, Feuchtigkeit und Fremdkörper weitgehend geschützt. Er kann in der Schutzhülle 22 gegebenenfalls auch vergossen werden. Die
Schutzhülle 22 läßt sich in ihrer zylinderischen Form
in die Bohrung 23 einpressen, einkitten oder festkleben
bzw. festspannen. Bei einem Defekt kann dadurch der
Informationsträger 13 einfach und schnell ausgewechselt
werden.

...

Da die Änderung der Streuinduktivität der beiden Übertragerspulen 14 und 15 gegenüber der Induktivität der Spulen 20a
bzw. 20b klein ist, sind relativ große Toleranzen in dem
Spalt zwischen Informationsträger 13 und Abtastsensor
12 möglich, so daß ein solches Kodiersystem auch bei
Fertigungsstraßen in der Schwerindustrie anwendbar
ist. Durch eine entsprechende Einstellung des Wobbelgenerators 25 ist es ferner möglich, den Durchlauf des
Frequenzbandes soweit zu erhöhen, daß die Informationen
im Informationsträger 13 in sehr kurzer Zeit zuverlässig ausgelesen werden können. Die abtastenden Sensoren
können dann auch bei höheren Geschwindigkeiten des Transportbandes 11 die Informationen beim Durchlauf des Informationsträgers 13 auslesen.

R. 18211
2.11.1982 Ws/Hm

0111693

ROBERT BOSCH GMBH, 7000 STUTTGART 1

Ansprüche

1. Kodiersystem zur Erfassung von Informationen über die Identifizierung von mobilen Teilen, insbesondere Werkstückträgern bei Fertigungsstraßen oder dgl., wobei die Teile mit einem Informationsträger versehen sind, dessen Informationen mittels stationär angeordneten Sensoren berührungslos abtastbar sind, dadurch gekennzeichnet, daß der Informationsträger (13) im wesentlichen aus einem elektrischen Schwingkreis besteht, der eine Übertragerspule (14) mit einem vorn offenen Magnetkreis (16) enthält, über den die Resonanzfrequenz (fo) des Schwingkreises als Information von einem stationären Sensor (12) abzufühlen ist.

2. Kodiersystem nach Anspruch 1, dadurch gekennzeichnet, daß der Sensor (12) den Schwingkreis zur Ermittlung der Resonanzfrequenz (fo) über ein Magnetfeld mit einer Folge unterschiedlicher Frequenzen abfühlt.

3. Kodiersystem nach Anspruch 2, dadurch gekennzeichnet, daß jeder Sensor (12) eine Übertragerspule (15) mit vorn offenem Magnetkreis (10) enthält, die der Übertragerspule (14) des Informationsträgers (13) beim Abfühlen der Information des mobilen Teiles (10) gegenüberliegt.

...

**0111693**

4. Kodiersystem nach Anspruch 3, dadurch gekennzeichnet, daß die Übertragerspulen (14, 15) jeweils in einem vorn offenen weichmagnetischen Kern, vorzugsweise einem Schalenkern (16, 17) angeordnet sind.

5. Kodiersystem nach einem der vorherigen Ansprüche, dadurch gekennzeichnet, daß der Schwingkreis des Informationsträgers (13) aus der Übertragerspule (14), einem Kondensator (19) und einer weiteren, mit dem Kondensator (19) in Reihe liegenden Spule (20) gebildet ist.

6. Kodiersystem nach einem der vorherigen Ansprüche, dadurch gekennzeichnet, daß der Schwingkreis aus mehreren Reihenschaltungen von je einer Spule (20a, 20b) und einem Kondensator (19a, 19b) besteht, die zueinander und zur Übertragerspule (14) parallel geschaltet sind.

7. Kodiersystem nach Anspruch 6, dadurch gekennzeichnet, daß der Schwingkreis des Informationsträgers (13) zwei Resonanzfrequenzen (fo1, fo2) aufweist.

8. Kodiersystem nach einem der vorherigen Ansprüche, dadurch gekennzeichnet, daß die Bauelemente (14, 16, 18, 19, 20) des Schwinkreises in einer vorn offenen Schutzhülle (23) eingebettet sind, welche mit dem vorn offenen Magnetkreis der Übertragerspule (14) am Werkstückträger (10) mit der Öffnung nach außen befestigt ist.

0111693

# FIG.1

# FIG.2

# FIG.3